(19) Europäisches Patentamt
European Patent Office
Office européen des brevets

(11) **EP 4 769 524 A2**

(12) **EUROPEAN PATENT APPLICATION**

(43) Date of publication:
**01.07.2026 Bulletin 2026/27**

(21) Application number: **25223278.0**

(22) Date of filing: **15.12.2025**

(51) International Patent Classification (IPC):
*H01M 4/133* $^{(2010.01)}$   *H01M 4/36* $^{(2006.01)}$
*H01M 4/587* $^{(2010.01)}$   *H01M 10/0525* $^{(2010.01)}$

(52) Cooperative Patent Classification (CPC):
**H01M 10/0525; H01M 4/133; H01M 4/1393;**
**H01M 4/366; H01M 4/587;** H01M 2004/021;
H01M 2004/027; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **27.12.2024 CN 202411967131**

(71) Applicant: **AESC Japan Ltd.**
**Yokohama-shi, Kanagawa 220-0012 (JP)**

(72) Inventor: **LI, Xin**
**Jiangyin City, Wuxi City, 214443 (CN)**

(74) Representative: **Becker, Eberhard**
**Becker Kurig & Partner**
**Patentanwälte mbB**
**Bavariastraße 7**
**80336 München (DE)**

(54) **NEGATIVE ELECTRODE MATERIAL AND PREPARATION METHOD THEREOF AND LITHIUM ION BATTERY**

(57) Provided are a negative electrode material and a preparation method thereof and a lithium ion battery. The negative electrode material includes natural graphite and a coating layer coated on the surface of the natural graphite, and the compression index K of the negative electrode material is: $30 \leq K \leq 80$; in which the compression index $K = 100(V_0 - V_F)/V_0$, where $V_0$ is the apparent volume per unit mass in a loose state, and $V_F$ is the tapped volume per unit mass. The negative electrode material of an embodiment has suitable powder fluidity, reduced functional groups on the surface of negative electrode material particles, is easy to disperse during processing, and at the same time, fewer functional groups on the surface reduce side reactions during high temperature storage, thereby improving the high temperature storage performance of the negative electrode material.

```
┌──────────────────────────────────────────────────────────┐
│ Perform crushing and shaping processing on natural flake  │──── S1
│ graphite raw material to obtain a first precursor          │
└──────────────────────────────────────────────────────────┘
                            │
                            ▼
┌──────────────────────────────────────────────────────────┐
│ Perform thermal shaping on the first precursor and remove  │──── S2
│ surface functional groups to obtain a second precursor     │
└──────────────────────────────────────────────────────────┘
                            │
                            ▼
┌──────────────────────────────────────────────────────────┐
│ Perform cold quenching processing on the second precursor, │──── S3
│ then form a coating layer on a surface of the precursor    │
│ after cold quenching to obtain negative electrode material │
└──────────────────────────────────────────────────────────┘
```

**FIG. 1**

EP 4 769 524 A2

## Description

### BACKGROUND

Technical Field

The disclosure relates to the field of lithium ion battery, specifically relates to a negative electrode material and a preparation method thereof and a lithium ion battery.

Related Art

Natural graphite has excellent kinetic performance, especially notable low temperature kinetic advantages, which stems from the abundant pores thereof that facilitate electrolyte wetting and provide edge plane lithium intercalation, meanwhile the natural graphite surface also has abundant functional groups, which may promote rapid desolvation of organic lithium. However, these factors also cause natural graphite to have more reactive sites, which easily lead to more side reactions, greatly deteriorating the high temperature storage performance thereof.

Therefore, it is necessary to provide a negative electrode material that improves the high temperature storage performance of natural graphite while maintaining the kinetic advantages of natural graphite.

## SUMMARY

Given the problems existing in the above related art, the disclosure provides a negative electrode material and a preparation method thereof and a lithium ion battery, so as to address the problem of deteriorated high temperature storage performance of natural graphite.

To achieve the above objectives and other related objectives, a first aspect of the disclosure provides a negative electrode material, the negative electrode material includes natural graphite and a coating layer coated on the natural graphite surface, the compression index K of the negative electrode material is: $30 \leq K \leq 80$; in which the compression index $K=100(V_0-V_F)/V_0$, where $V_0$ is the apparent volume per unit mass in loose state, $V_F$ is the tapped volume per unit mass.

In one embodiment of the disclosure, the Young's modulus E of the negative electrode material is $17\text{GPa} \leq E \leq 25\text{GPa}$.

In one embodiment of the disclosure, the contact angle $\theta$ between the electrolyte and the negative electrode material surface is $82° \leq \theta \leq 90°$.

In one embodiment of the disclosure, the mass of the coating layer accounts for 0.5% to 1% of the mass of the natural graphite; the material of the coating layer includes aluminum oxide or titanium oxide, the particle size Dv50 of the aluminum oxide or the titanium oxide is less than $0.1\mu\text{m}$.

In one embodiment of the disclosure, the particle size Dv50 of the negative electrode material is $5\mu\text{m}$ to $20\mu\text{m}$.

A second aspect of the disclosure provides a preparation method of a negative electrode material, and the method includes the following steps:

performing crushing and shaping processing on natural flake graphite raw material to obtain a first precursor;
performing thermal shaping on the first precursor and removing surface functional groups to obtain a second precursor;
performing cold quenching processing on the second precursor, then forming a coating layer on the surface of the precursor after cold quenching to obtain the negative electrode material.

In one embodiment of the disclosure, the step of performing thermal shaping on the first precursor and removing surface functional groups includes:

heating up the first precursor to a first temperature;
then, performing hydroxylation processing on the first precursor with deionized water, in which the addition amount of the deionized water accounts for 1% to 3% of the mass of the first precursor;
then, performing peroxidation processing on the first precursor with oxygen-containing gas, in which the oxygen-containing gas is a mixed gas of nitrogen and oxygen, and the mass content of oxygen in the mixed gas is 10% to 40%;
then, heating to a second temperature and evacuating outward until the gas pressure is less than 0.2 atmospheric pressure, then performing temperature maintaining for 4h, in which the first temperature is 450°C to 600°C, and the second temperature is 800°C to 1000°C.

In one embodiment of the disclosure, the step of forming the coating layer on the surface of the precursor after cold quenching includes: adopting γ-type aluminum oxide to perform ball milling on the material after cold quenching processing for 1h to 3h, then calcining at 700°C to 900°C under inert atmosphere for 4h to 8h, then cooling to room temperature to obtain the negative electrode material; the particle size Dv50 of the γ-type aluminum oxide is less than 0.1μm, and the usage amount of the γ-type aluminum oxide is less than or equal to 1% relative to the mass of the second precursor.

In one embodiment of the disclosure, the cold quenching processing is performing cooling process on the second precursor with inert gas, the temperature difference between the cold quenching processing temperature and the previous process temperature is 400°C to 600°C, and the flow rate of the inert gas is less than or equal to 60 L/min; and/or, the particle size Dv50 of the first precursor is 15μm to 25μm, and the particle size distribution width (Dv90-Dv10)/Dv50<1.1.

A third aspect of the disclosure provides a lithium ion battery, the lithium ion battery includes a negative electrode sheet, and the negative electrode sheet includes any of the aforementioned negative electrode materials or the negative electrode material prepared by any of the aforementioned preparation methods.

The negative electrode material of the disclosure has suitable powder fluidity by adjusting the compression index thereof, which means that functional groups on the negative electrode material particle surface are reduced, the interaction force between adjacent particles is small, it is easy to disperse during processing, reducing the possibility of particle agglomeration. Meanwhile, fewer functional groups on the surface make the side reactions of the negative electrode material reduced during high temperature storage process, thereby improving the high temperature storage performance of the negative electrode material. In addition, by adjusting the Young's modulus of the negative electrode material to have certain mechanical strength, the generation of microcracks during cold pressing process is reduced, the reaction activity specific surface during high temperature storage is reduced, further improving the high temperature storage performance of the negative electrode material. Furthermore, by adjusting the contact angle between the negative electrode material and electrolyte, the wettability to electrolyte is reduced, thereby reducing the reaction activity specific surface during high temperature storage process, further improving the high temperature storage performance of the negative electrode material.

The disclosure, when preparing the negative electrode material, uses natural flake graphite as raw material, and sequentially undergoes thermal shaping, removal of surface functional groups, cold quenching processing and other processes, so that the negative electrode material maintains the kinetic performance advantages of natural graphite while having suitable compression index, thereby reducing the possibility of negative electrode material agglomeration, reducing side reactions during high temperature storage process, and improving the high temperature storage performance of the negative electrode material. The preparation method of the disclosure may effectively address the problem of deterioration of high temperature storage performance of natural graphite, and is simple and easy to operate, greatly reducing negative electrode cost and energy consumption.

## BRIEF DESCRIPTION OF THE DRAWINGS

In order to more clearly illustrate the technical solutions in the examples of the disclosure or the related art, the drawings required for use in the description of the examples or related art will be briefly introduced below. Certainly, the drawings in the following description are merely some examples of the disclosure. For persons of ordinary skill in the art, other examples may also be obtained according to these drawings without creative effort.

The FIGURE is a flowchart of a preparation method of the negative electrode material of the disclosure in one embodiment.

## DESCRIPTION OF THE EMBODIMENTS

The following illustrates the implementation modes of the disclosure through specific examples, and persons skilled in the art may easily understand other advantages and effects of the disclosure from the content disclosed in this specification. The disclosure may also be implemented or applied through other different specific implementation modes, and various details in this specification may also be modified or changed in various ways based on different viewpoints and applications without departing from the spirit of the disclosure. It should be noted that, in the case of no conflict, the following examples and the characteristics in the examples may be combined with each other. Test methods without specific conditions noted in the following examples are usually performed according to conventional conditions, or according to conditions recommended by respective manufacturers.

Unless otherwise defined, all technical and scientific terms used herein have the same meaning as commonly understood by persons of ordinary skill in the art to which the disclosure belongs. The terms used herein in the specification are for the purpose of merely describing particular examples and is not intended to limit the disclosure. As used herein, the term "and/or" includes any and all combinations of one or more of the associated listed items.

Herein, when numerical ranges are involved, unless otherwise specified, the distribution of selectable numerical values within the numerical range is considered continuous, and includes both numerical endpoints of the numerical range (that is, the minimum value and the maximum value), as well as each numerical value between these two numerical endpoints. When multiple numerical ranges are provided to describe features or characteristics, these numerical ranges may be combined.

Herein, the compression index refers to GB/T 6609.25-2023 to test tapped density and bulk (loose packing) density, then calculates apparent volume and tapped volume respectively according to the formula p=m/v, and then calculates the compression index according to $K=100(V_0-V_F)/V_0$; Young's modulus refers to GB/T 34186-2017 for testing; contact angle refers to GB/T 36086-2018 for testing.

Natural graphite has a rich porous structure, which facilitates electrolyte wetting and provides lithium intercalation space. Meanwhile, the abundant functional groups on the natural graphite surface may promote rapid desolvation of organic lithium. These characteristics enable natural graphite to have excellent kinetic performance, but at the same time may also result in more reactive sites, leading to more side reactions, thereby deteriorating the high temperature storage performance of natural graphite. Methods for improving the storage performance of natural graphite in the related art include, for example, filling natural graphite with impregnated pitch, followed by graphitization treatment to reduce the pores of natural graphite; using ultra-high temperature graphitization treatment to passivate the graphite surface. These methods all affect the kinetic performance of natural graphite.

Based on above, the disclosure provides a negative electrode material, a preparation method of the negative electrode material, and a lithium ion battery including the negative electrode material. By controlling the compression index K of the negative electrode material to have suitable powder fluidity, side reactions may be reduced while maintaining the kinetic advantages of natural graphite, thereby effectively improving the high temperature storage performance of natural graphite.

A first aspect of the disclosure provides a negative electrode material, the negative electrode material includes natural graphite and a coating layer coated on the natural graphite surface, and the compression index K of the negative electrode material is $30 \leq K \leq 80$. In the configuration, the compression index $K= 100(V_0-V_F)/V_0$, where $V_0$ is the apparent volume per unit mass of the negative electrode material in loose state, and $V_F$ is the tapped volume per unit mass. The compression index K is used to reflect the fluidity of the negative electrode material. The smaller the compression index K, the better the powder fluidity of the negative electrode material, which is macroscopically manifested as smaller interaction forces between negative electrode material particles, and microscopically manifested as fewer functional groups on the negative electrode material particle surface. During processing, it is easy to disperse, reducing the possibility of particle agglomeration. Meanwhile, with fewer functional groups on the negative electrode material particle surface, fewer side reactions occur during high temperature storage process, thereby improving the high temperature storage performance of the negative electrode material. Conversely, the larger the compression index K, the worse the powder fluidity of the negative electrode material, which means that there are more functional groups on the negative electrode material particle surface, more side reactions occur during high temperature storage process, and the high temperature storage performance is poor. However, if the compression index is too small, the situation may also cause the surface functional groups of the negative electrode material to be almost lost, thereby affecting the kinetic performance of natural graphite itself. Therefore, when the compression index K of the negative electrode material of the present application is controlled within the range of $30 \leq K \leq 80$, the negative electrode material may reduce the functional groups on its surface while maintaining the kinetic performance of natural graphite, thereby improving the high temperature storage performance thereof. In some examples, the compression index K of the negative electrode material may be exemplified as 30, 50, 60, or 80.

In one example, the Young's modulus E of the negative electrode material is $17GPa \leq E \leq 25GPa$. The Young's modulus represents the degree of initial length change within a unit cross-section when powder is subjected to a certain tensile stress, and the value reflects the deformation of the material under stress. The calculation formula for Young's modulus is $E=\sigma/\varepsilon$, where $\sigma$ represents the stress within a unit area of the material, and $\varepsilon$ represents the strain within a unit length. From the calculation formula of Young's modulus, it may be seen that when the stress $\sigma$ within a unit area of the material remains constant, the larger the Young's modulus E, the smaller the strain $\varepsilon$ within a unit length, indicating that the material is less prone to deformation, that is, the mechanical strength is greater; conversely, the smaller the Young's modulus E, the larger the strain $\varepsilon$ within a unit length, indicating that the material is more prone to deformation, that is, the mechanical strength is smaller. The negative electrode material undergoes lithium ion intercalation and deintercalation during the charge and discharge process of lithium ion batteries. If the mechanical strength of the negative electrode material is small (the material is relatively soft), large volume deformation occurs during the lithium ion intercalation and deintercalation process and does not recover, which is unfavorable for the cycle of lithium ion batteries; while if the negative electrode material has large mechanical strength (with certain hardness), the material can better maintain the microscopic crystal structure during the lithium ion intercalation and deintercalation process, resulting in smaller irreversible deformation, making the lithium ion battery have better cycle performance; however, if the hardness of the negative electrode material is too large, on one hand it is not easy to compress, and may also generate microcracks, increasing the reactive specific surface area during high temperature storage. Therefore, controlling the Young's modulus E of the negative electrode material within an appropriate range can not only maintain good mechanical strength, reduce the generation of microcracks during cold pressing process, reduce the reactive specific surface area during high temperature storage, but also have better cycle performance. In some examples, the Young's modulus E of the negative electrode material may be, for example, 17GPa, 20 GPa, 22 GPa, or 25GPa.

In one example, the contact angle θ between the electrolyte and the negative electrode material surface is 82°≤θ≤90°. The contact angle θ is the reciprocal of the curvature radius of a minimal curved surface formed by the liquid surface on the solid surface when the liquid contacts the solid surface. It is an important parameter for measuring the wetting performance of liquid on solid surfaces. When the contact angle θ is less than 90°, the solid surface is hydrophilic, and the liquid can more easily wet the solid. The smaller the angle, the better the wetting performance; the larger the angle, the worse the wetting performance. In the present application, the contact angle θ of the electrolyte on the negative electrode material surface is 82°≤θ≤90°, which may reduce the wetting of the negative electrode material by the electrolyte, thereby reducing the reactive specific surface area during high temperature storage process, and further improving the high temperature storage performance of the negative electrode material. Exemplarily, the contact angle θ may be 82°, 85°, 88°, or 90°. It should be noted that the electrolyte here is a commonly used electrolyte in lithium ion batteries, and the solvent of the electrolyte includes but is not limited to dimethyl carbonate. The electrolyte adopted in the present application is from the manufacturer Xinya Shanshan Advanced Materials (Quzhou) Co., Ltd., with the model being E3.

In one example, the material of the coating layer may be aluminum oxide, or may be titanium oxide. Further, the coating layer material is aluminum oxide. Aluminum oxide coated on the natural graphite surface may, on one hand, reduce the contact between natural graphite and electrolyte, reduce side reactions, and improve the high temperature stability of the negative electrode material; on the other hand, aluminum oxide has a relatively large true density, which may also increase the Young's modulus and compaction density of the negative electrode material.

In one example, the particle size Dv50 of the negative electrode material is 5μm to 20μm. Dv50 represents the particle size corresponding to when the cumulative volume distribution reaches 50% in the particle size distribution. Exemplarily, the particle size Dv50 of the negative electrode material may be 5μm, 10μm, 15μm, or 20μm.

The second aspect of the disclosure provides a preparation method of a negative electrode material. The negative electrode material obtained by adopting this preparation method has a relatively low compression index, thereby enabling the negative electrode material to have suitable powder flowability, reducing the possibility of particle agglomeration and side reactions occurring during high temperature storage process.

Referring to FIGURE, the preparation method of the negative electrode material at least includes the following steps:

S1, performing crushing and shaping processing on natural flake graphite raw material to obtain a first precursor;
S2, performing thermal shaping on the first precursor and removing surface functional groups to obtain a second precursor;
S3, performing cold quenching processing on the second precursor, then forming a coating layer on a surface of the precursor after cold quenching to obtain negative electrode material.

Specifically, Step S1 uses natural flake graphite as raw material, and preprocessing is required before performing crushing and shaping processing to remove impurity minerals in the raw material. The preprocessing includes water washing and flotation. First, water washing is performed on the natural flake graphite to remove mud, dust, and other impurities on the graphite surface, so as to prepare for the subsequent flotation process. Flotation achieves different selective adhesion of graphite particles and other impurity minerals on the water surface by adding flotation agents, thereby separating graphite from other minerals and improving the purity of natural flake graphite.

Since natural flake graphite has a relatively large particle size, which may reach micrometer or even millimeter level, crushing and shaping processing is required on the natural flake graphite after preprocess to obtain a first precursor with suitable particle size distribution. The operation specifically includes: performing high-frequency shaping on the natural flake graphite after water washing and flotation, reducing the size Dv50 of millimeter-level natural flake graphite to 15 to 25μm, and removing larger sizes and smaller sizes by classification, making the particle size distribution width thereof (Dv90-Dv10)/Dv50<1.1. The above high-frequency shaping may adopt conventional shaping methods in the art, for example, using honeycomb mill to shape natural flake graphite at 90Hz high frequency for 6h. The honeycomb mill can effectively disperse and deagglomerate aggregated graphite flakes, reduce damage to large flake graphite, and improve the quality of graphite products. It should be noted that Dv90 represents the particle size corresponding to when the cumulative volume distribution reaches 90% in particle size distribution; Dv10 represents the particle size corresponding to when the cumulative volume distribution reaches 10% in particle size distribution. The particle size distribution width (Dv90-Dv10)/Dv50 is an index for measuring particle size uniformity. The larger the particle size distribution width, the wider the particle size distribution, that is, the greater the difference between large particles and small particles; the closer the particle size distribution width is to 0, the more uniform the particle size and the higher the size consistency. Step S1 reduces the particle size Dv50 of natural flake graphite to 15 to 25μm, and having the particle size distribution width (Dv90-Dv10)/Dv50<1.1 can enable the finally obtained negative electrode material to meet the specification of the particle size for use. Exemplarily, the Dv50 of the first precursor may be 15μm, 20μm or 25μm; the particle size distribution width (Dv90-Dv10)/Dv50 may be, for example, 1, 0.5 or 0.

In Step S2, functional groups on the surface of the first precursor are removed, and the operation specifically includes: first, collecting the first precursor obtained in Step S1 and transferring into an air flow mill and heating up to a first temperature to remove crystalline water in the first precursor. The first temperature is 450°C to 600°C, for example, may be 450°C, 500°C or 600°C. Then, deionized water is pumped in to perform hydroxylation processing on the first precursor to remove partial ester groups, acyl groups and other impurity functional groups, in which the addition amount of deionized water accounts for 1% to 3% of the mass of the first precursor. Exemplarily, the addition amount of deionized water may be 1%, 2% or 3%. Then, ventilation is maintained to perform ultra-high frequency thermal shaping, with shaping frequency of 100Hz to 140Hz, for example 100Hz, 120Hz or 140Hz, and the duration of thermal shaping is 0.5h to 2h, for example, may be 0.5h, 1h, 1.5h or 2h. After thermal shaping is completed, oxygen-containing gas is introduced from the upper end of the air flow mill to perform peroxidation processing on the first precursor to form easily detachable oxygen-containing functional groups, in which the oxygen-containing gas adopts mixed gas of nitrogen and oxygen, and the mass content of oxygen in the mixed gas is 10% to 40%, for example, 10%, 20%, 30% or 40%. The flow rate of oxygen-containing gas is 2L/min, and ventilation is maintained for 4h while simultaneously shaping. After stopping ventilation, performing heating up to a second temperature and extract air outward to remove the oxygen-containing functional groups formed in the above steps. The second temperature is 800 to 1000°C, exemplarily, may be 800°C, 900°C or 1000°C. After the pressure in the chamber is less than 0.2 atmospheric pressure, temperature is maintained for 4h to stabilize crystal form, and a second precursor is obtained.

Afterward, Step S3 is performed to perform cold quenching processing on the second precursor obtained in Step S2 to obtain negative electrode material with certain mechanical strength. Cold quenching processing uses inert gas to perform gradient cooling on the second precursor, and the inert gas may be, for example, nitrogen, helium or argon. Gradient cooling means cooling to a certain temperature and then maintaining for a period of time; then cooling to another temperature and maintaining for a period of time, and so on, until reaching the set temperature. The temperature difference for each cold quenching processing should not be too large, as excessive temperature difference easily generates microcracks inside the graphite. In the disclosure, the temperature difference for cold quenching processing is 400 to 600°C, specifically may be, for example, 400°C, 500°C, or 600°C. The number of cold quenching processing is at least once. Too many times do not significantly improve performance but instead cause energy consumption. The flow rate of inert gas is less than or equal to 60L/min, further 30L/min to 60L/min, exemplarily, may be 30L/min, 40L/min, 50L/min or 60L/min. When the flow rate of inert gas is greater than 60L/min, instantaneous cooling occurs, causing defects such as microcracks inside the material.

After cold quenching processing is completed, a coating layer is formed on the precursor surface. In one example, the material of the coating layer is aluminum oxide, and the coating process of aluminum oxide is as follows:

γ-type aluminum oxide is adopted to perform ball milling on the material after cold quenching processing for 1h to 3h, then calcined at 700°C to 900°C under inert atmosphere for 4h to 8h, afterward cooled down to room temperature under inert atmosphere to obtain natural graphite negative electrode material with aluminum oxide coated on the surface. The calcination temperature may be exemplified as 700°C, 800°C or 900°C, and the calcination time may be exemplified as 4h, 6h or 8h. γ-type aluminum oxide is adopted because γ-type aluminum oxide is unstable and may be chemically adsorbed on the graphite surface to react with dangling bonds on the graphite surface and convert to stable α-type aluminum oxide. The particle size Dv50 of the γ-type aluminum oxide is less than 0.1μm. The smaller the particle size, the easier it is to adsorb on the graphite surface to form uniform aluminum oxide coating layer. The amount of γ-type aluminum oxide is less than or equal to 1% relative to the mass of the second precursor, further 0.5 to 1%, more further 0.8%. The negative electrode material coats a layer of aluminum oxide on the surface of natural graphite. The coating of aluminum oxide may avoid direct contact between natural graphite and electrolyte, reduce side reactions, and improve the stability of negative electrode material. In addition, since the step of removing functional groups greatly reduces the wettability of electrolyte to electrolyte, which is unfavorable for lithium ion transport inside the battery, the coating of aluminum oxide may improve the wettability of electrolyte to negative electrode material.

In other examples, the coating layer material may also be replaced with titanium dioxide, and for the coating process of titanium dioxide, reference may be made to conventional processes in the field, so details will not be repeated here.

After the above steps are completed, the particle size Dv50 of the obtained negative electrode material is 5μm to 20μm. Exemplarily, the particle size Dv50 of the negative electrode material may be 5μm, 10μm, 15μm or 20μm.

The negative electrode material obtained by adopting the above preparation method has smaller compression index, higher Young's modulus and suitable contact angle, maintaining the kinetics of natural graphite while having excellent high temperature storage performance.

The third aspect of the disclosure provides a lithium ion battery, and the lithium ion battery includes, for example, non-aqueous electrolyte lithium battery, solid-state lithium battery. Taking non-aqueous electrolyte lithium battery as an example, the lithium ion battery includes negative electrode sheet, positive electrode sheet, and separator set between the positive electrode sheet and the negative electrode sheet, in which the negative electrode sheet includes the negative electrode material of the disclosure or the negative electrode material prepared by the preparation method.

Specifically, the negative electrode sheet includes negative electrode current collector and negative electrode active material layer set on at least one side surface of the negative electrode current collector. The negative electrode current collector may adopt conventional materials in the field, for example, copper foil, carbon-coated copper foil. The negative electrode active material layer may be set on the surface of one side of the negative electrode current collector, or may be set on the surfaces of both sides. The negative electrode active material layer includes negative electrode active material, negative electrode conductive agent, and negative electrode binder, in which the negative electrode active material is selected from materials capable of intercalating-deintercalating lithium ions. In the disclosure, the negative electrode active material is the above negative electrode material. In other examples, the negative electrode active material may also select the combination of the above negative electrode material with other materials, for example silicon-based negative electrode material. The silicon-based negative electrode material includes, for example, silicon oxide compound $SiO_x$ (0<x<2), silicon-carbon material, silicon simple substance. However, the present application is not limited to these materials listed above, and other conventional materials that may be used as negative electrode active materials may also be used. These negative electrode active materials may be used alone, or two or more may be used in combination. The negative electrode conductive agent may improve electronic conductivity, and plays a role of collecting micro-current between negative electrode active materials and between negative electrode active material and negative electrode current collector, so as to reduce the contact resistance of the battery and accelerate the movement rate of electrons. In some examples, the negative electrode conductive agent includes at least one of conductive carbon black (SP), conductive graphite, carbon fiber, carbon nanotube, graphene. Optionally, the negative electrode conductive agent is, for example, conductive carbon black; or composition of carbon fiber and conductive carbon black; or composition of carbon nanotube and graphene. The binder is used to bond the negative electrode active material and negative electrode conductive agent, and provides certain adhesive force for the negative electrode active material layer to make the material bond on the negative electrode current collector. As an example, the negative electrode binder is selected from at least one of polyacrylic acid (PAA), polyvinylidene fluoride (PVDF), styrene-butadiene rubber (SBR), carboxymethyl cellulose (CMC), styrene-acrylate, acrylic multi-copolymer, for example, the negative electrode binder is polyvinylidene fluoride, or composition of styrene-butadiene rubber and carboxymethyl cellulose. For the ratio of negative electrode active material, negative electrode conductive agent, and negative electrode binder, reference may be made to conventional settings in the field.

The preparation process example of the negative electrode sheet is as follows: first mixing the negative electrode active material, negative electrode conductive agent, and negative electrode binder according to a certain ratio in solvent such as deionized water and stirring uniformly to form negative electrode slurry, then coating the negative electrode slurry on the negative electrode current collector, after drying, rolling, cutting, and other processes, the negative electrode sheet is obtained.

The positive electrode sheet includes a positive electrode current collector and a positive electrode active material layer set on at least one side surface of the positive electrode current collector. The positive electrode current collector may adopt conventional materials in the field, for example, aluminum foil, carbon-coated aluminum foil. The positive electrode active material layer may be set on the surface of one side of the positive electrode current collector, or may be set on the surfaces of both sides. The positive electrode active material layer includes positive electrode active material, positive electrode conductive agent, and positive electrode binder, in which the positive electrode active material may select any positive electrode material applicable to lithium ion battery, that is, compounds that can reversibly intercalate and deintercalate lithium ion may all be used. As an example, the positive electrode active material may be ternary material, for example, nickel cobalt manganese ternary material (NCM), nickel cobalt aluminum ternary material (NCA), may be iron lithium positive electrode material, for example, lithium iron phosphate (LFP), lithium manganese iron phosphate (LMFP), and may also be conventional materials such as lithium cobalt oxide, lithium manganese oxide. These materials may be used alone or in combination. The positive electrode binder is for example any one or more of polyvinylidene fluoride (PVDF), polyethylene oxide (PEO), polyamide (PA), polyacrylonitrile (PAN), polyacrylate, polyvinyl ether, polymethyl methacrylate (PMMA), ethylene-propylene-diene terpolymer (EPDM), polyhexafluoropropylene or styrene-butadiene rubber (SBR). The positive electrode conductive agent includes but is not limited to at least one of conductive carbon black (SP), conductive graphite, carbon fiber, carbon nanotube, graphene. Optionally, the conductive agent is, for example, conductive carbon black; or a composition of carbon fiber and conductive carbon black; or a composition of carbon nanotube and graphene. For the ratio of positive electrode active material, positive electrode conductive agent, and positive electrode binder, reference may be made to conventional settings in the field.

The preparation process example of the positive electrode sheet is as follows: first mixing the positive electrode active material, positive electrode conductive agent, and positive electrode binder according to a certain ratio in solvent such as N-methylpyrrolidone (NMP) and stirring uniformly to form positive electrode slurry, then coating the positive electrode slurry on the positive electrode current collector, after drying, rolling, cutting and other processes, the positive electrode sheet is obtained.

The separator is set between the positive electrode sheet and the negative electrode sheet, used to separate the positive electrode sheet and the negative electrode sheet, prevent short circuit from occurring inside the battery, and simultaneously enable lithium ion to pass through and move between the positive electrode and negative electrode to implement the charge and discharge process of the battery. The separator may select porous materials such as polyethylene film (Polyethylene, PE), polypropylene film (Polypropylene, PP), glass fiber film or composite film. The thickness of the separator is 9 to 18$\mu$m, the air permeability is 180s/100mL to 380s/100mL; the porosity is 30% to 50%.

The lithium ion battery further includes electrolyte, during the charge and discharge process of the battery, the electrolyte plays a role of conducting lithium ion. The electrolyte includes organic solvent and lithium salt, the lithium salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP) and lithium tetrafluoro(oxalato)phosphate (LiTFOP). Further, the lithium salt uses lithium hexafluorophosphate with better comprehensive performance or a composition of lithium hexafluorophosphate with other lithium salts, for example a composition of lithium hexafluorophosphate with lithium bis(fluorosulfonyl)imide. The organic solvent may be selected from one or several of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC). The electrolyte may further include functional additives, for example fluoroethylene carbonate (FEC), prop-1-ene-1,3-sultone (PST), tetravinylsilane (TVSI), vinylene carbonate (VC), ethylene sulfate (DTD), which may be specifically added according to requirements in actual production.

Battery assembly: the prepared positive electrode sheet, separator, and negative electrode sheet are sequentially placed, with the separator positioned in the middle of the positive electrode and negative electrode sheets to play an isolation role, and a bare battery cell is obtained through winding or stacking. The bare battery cell is loaded into a battery housing, and after assembly, electrolyte injection, formation, capacity grading, and other processes, a lithium ion battery is obtained.

In other examples, the lithium ion battery may further be a solid-state lithium ion battery, the electrolyte of the solid-state lithium ion battery is solid, common solid electrolytes are, for example, oxide solid electrolyte, halide solid electrolyte, sulfide solid electrolyte, which are not described in detail here, and persons skilled in the art may select according to actual production needs.

It should be noted that, the structures not described in detail in the above lithium ion battery may all be set with reference to existing technology, so details will not be repeated here.

The lithium ion battery of the disclosure may be used in electronic devices in the form of a single battery, battery module or battery pack to provide power therefor. The electronic devices include, for example, but are not limited to mobile phones, tablets, laptop computers, electric toys, electric vehicles, new energy vehicles, ships, and spacecraft. Among them, the electric toys may include, for example, fixed or mobile electric toys, for example, game consoles, electric car toys, electric ship toys and electric airplane toys, the spacecraft may include, for example, airplanes, rockets, space shuttles and spaceships. The new energy vehicles may be, for example, pure electric vehicles, hybrid vehicles or range-extended vehicles.

The technical solution of the disclosure is described in detail below through several specific examples and comparative examples. Unless otherwise specified, the raw materials and reagents used in the following examples are all commercially available products, or may be prepared by conventional methods in the art, and the instruments used in the examples are all commercially available.

Example 1

This example provides a negative electrode material, and the negative electrode material includes natural graphite and aluminum oxide, in which the aluminum oxide is uniformly coated on the natural graphite surface, the coating amount of aluminum oxide accounts for 1% of the mass of natural graphite; the compression index K of the negative electrode material is 54, the young's modulus E is 21 GPa, the contact angle $\theta$ is 85°; the particle size Dv50 of the negative electrode material is 12.7$\mu$m.

This example further provides a preparation method of the above negative electrode material, including the following steps.

Step 1: 90Hz high-frequency shaping is performed on natural flake graphite after water washing and flotation with a honeycomb mill for 6h to reduce the size Dv50 of millimeter-scale natural flake graphite to 15 to 25$\mu$m, and larger sizes and smaller sizes are removed by classification, so that the particle size distribution width (Dv90-Dv10) / Dv50 is 1.0, and a first precursor is obtained.

Step 2: the powder of the first precursor is collected and transferred into an air jet mill and heated up to T1: 600°C, deionized water is pumped in according to a mass ratio of the first precursor to deionized water of 50:1 (the addition amount of deionized water is 2% of the mass of the first precursor), then 120Hz ultra-high frequency shaping is performed for 2h, then a mixed gas of nitrogen and oxygen at 600°C (mass ratio 4:1, the mass percentage content of oxygen in the mixed gas is 20%) is introduced from the upper end of the air jet mill, the flow rate of the mixed gas is L1: 2L/min, ventilation is maintained for 4h while shaping simultaneously; after stopping gas flow, the temperature is raised to T2: 800°C and air is extracted outward, after the pressure in the chamber is less than 0.2 atmospheric pressure, temperature maintaining is performed for 4h, a and a second precursor is obtained. Then, inert gas is introduced from the upper end of the air jet mill to cool down to T3: 200°C, the flow rate L2 of the inert gas is 60L/min, ventilation is maintained for 2h, then heating is stopped, and a spheroidized precursor is obtained.

Step 3: the above spheroidized precursor is ball-milled with γ-type aluminum oxide for 2h; the particle size of γ-type aluminum oxide is less than 0.1μm, the usage amount is 1wt%, after ball-milling for 2h, the sphericity of the finished product is greater than 0.93; calcination is performed at 800°C for 6h under inert atmosphere, cooling down to room temperature is performed under inert atmosphere, and a finished product of 12.7μm is obtained.

Referring to Table 1, the disclosure further provides Examples 2 to 9 and Comparative Examples 1 to 5.

Example 2

This example differs from Example 1 in that, the compression index K of the negative electrode material is 67, the Young's modulus E is 23 GPa, the contact angle θ is 83°; the particle size Dv50 of the negative electrode material is 13.1μm.

In the preparation method, the addition amount of deionized water during hydroxylation treatment is 1%, and the rest remains unchanged.

Example 3

This example differs from Example 1 in that, the compression index K of the negative electrode material is 42, the Young's modulus E is 21 GPa, the contact angle θ is 88°; the particle size Dv50 of the negative electrode material is 12.5μm.

In the preparation method, the addition amount of deionized water during hydroxylation treatment is 3%, and the rest remains unchanged.

Example 4

This example differs from Example 1 in that, the compression index K of the negative electrode material is 75, the Young's modulus E is 25 GPa, the contact angle θ is 82°; the particle size Dv50 of the negative electrode material is 13.5μm.

In the preparation method, the mass percentage content of oxygen in the mixed gas during peroxidation treatment is 40%.

Example 5

This example differs from Example 1 in that, the compression index K of the negative electrode material is 35, the Young's modulus E is 20 GPa, the contact angle θ is 90°; the particle size Dv50 of the negative electrode material is 12.4μm.

In the preparation method, the mass percentage content of oxygen in the mixed gas during peroxidation treatment is 10%.

Example 6

This example differs from Example 1 in that, the compression index K of the negative electrode material is 30, the Young's modulus E is 17 GPa, the contact angle θ is 87°; the particle size Dv50 of the negative electrode material is 12.3μm.

In the preparation method, the temperature T2 during outward gas extraction is adjusted to 1000°C, and during cold quenching processing, cooling down is first performed with 600°C inert gas while ventilation is maintained for 2h, then cooling down is performed with 200°C inert gas while ventilation is maintained for 2h.

Example 7

This example differs from Example 1 in that, the compression index K of the negative electrode material is 30, the Young's modulus E is 17 GPa, the contact angle θ is 88°; the particle size Dv50 of the negative electrode material is 12.1μm.
In the preparation method, the temperature during outward gas extraction is raised to 900°C, and the cold quenching temperature is 300°C.

Example 8

This example differs from Example 1 in that, the compression index K of the negative electrode material is 80, the Young's modulus E is 19 GPa, the contact angle θ is 90°; the particle size Dv50 of the negative electrode material is 13μm.
In the preparation method, the amount of γ-type aluminum oxide in Step 3 is 0.5%.

Example 9

This example differs from Example 1 in that, the compression index K of the negative electrode material is 68, the Young's modulus E is 21 GPa, the contact angle θ is 87°; the particle size Dv50 of the negative electrode material is 13.3μm.
In the preparation method, the amount of γ-type aluminum oxide in step three is 0.8%.

Comparative Example 1

This comparative example differs from Example 1 in that, the compression index K of the negative electrode material is 26, the Young's modulus E is 17GPa, the contact angle θ is 90°; the particle size Dv50 of the negative electrode material is 11.6μm.
In Step 2 of the preparation method, the temperature when evacuating is raised to 1250°C.

Comparative Example 2

This comparative example differs from Example 1 in that, the compression index K of the negative electrode material is 123, the Young's modulus E is 30GPa, the contact angle θ is 102°; the particle size Dv50 of the negative electrode material is 15.4μm.
In the preparation method, no step of heating up is performed before the air extraction.

Comparative Example 3

This comparative example adopts commercially available conventional 12μm natural graphite. The compression index K of the negative electrode material in this comparative example is 138, the Young's modulus E is 2GPa, the contact angle θ is 74°; the particle size Dv50 of the negative electrode material is 11.2μm.

Comparative Example 4

This comparative example differs from Example 1 in that, the compression index K of the negative electrode material is 95, the Young's modulus E is 15GPa, the contact angle θ is 81°; the particle size Dv50 of the negative electrode material is 12.7μm.
In the preparation method, the amount of γ-type aluminum oxide in step three is 0.2%.

Comparative Example 5

This comparative example differs from Example 1 in that, the compression index K of the negative electrode material is 106, the Young's modulus E is 15 GPa, the contact angle θ is 80°; the particle size Dv50 of the negative electrode material is 10.5μm; the natural graphite surface is not coated with aluminum oxide.
Steps 3 and 4 are not included in the preparation method.

Table 1: Parameter characteristics and preparation method parameters of negative electrode materials in Examples 1 to 9 and Comparative Examples 1 to 5

| Number | K | E/GPa | $\theta$/° | Dv50/$\mu$m | Hydroxylation processing (deionized water addition amount) | Peroxidation processing (percentage of oxygen in the gas mixture) | Cold quenching temperature T3/°C | Temperature when evacuating T2/°C | Aluminum oxide coating amount |
|---|---|---|---|---|---|---|---|---|---|
| Example 1 | 54 | 21 | 85 | 12.7 | 2% | 20% | 200 | 800 | 1% |
| Example 2 | 67 | 23 | 83 | 13.1 | 1 % | 20% | 200 | 800 | 1% |
| Example 3 | 42 | 21 | 88 | 12.5 | 3% | 20% | 200 | 800 | 1% |
| Example 4 | 75 | 25 | 82 | 13.5 | 2% | 40% | 200 | 800 | 1% |
| Example 5 | 35 | 20 | 90 | 12.4 | 2% | 10% | 200 | 800 | 1% |
| Example 6 | 30 | 17 | 87 | 12.3 | 2% | 20% | 200 | 1000 | 1% |
| Example 7 | 30 | 17 | 88 | 12.1 | 2% | 20% | 300 | 900 | 1% |
| Example 8 | 80 | 19 | 90 | 13.0 | 2% | 20% | 200 | 800 | 0.5% |
| Example 9 | 68 | 21 | 87 | 13.3 | 2% | 20% | 200 | 800 | 0.8% |
| Comparative Example 1 | 26 | 17 | 90 | 11.6 | 2% | 20% | 200 | 1250 | 1% |
| Comparative Example 2 | 123 | 30 | 102 | 15.4 | 2% | 20% | / | cancel heating up step | 1% |
| Comparative Example 3 | 138 | 2 | 74 | 11.2 | / | / | / | / | |
| Comparative Example 4 | 95 | 15 | 81 | 12.7 | 2% | 20% | 200 | 800 | 0.2% |
| Comparative Example 5 | 106 | 15 | 80 | 10.5 | 2% | 20% | 200 | 800 | 0 |

To validate the performance of the negative electrode material of the disclosure, the inventor respectively applied the negative electrode materials of Examples 1 to 9 and Comparative Examples 1 to 5 in lithium ion batteries, and performed performance tests on each lithium ion battery. The composition and test method of the lithium ion batteries are as follows, and the test results are shown in Table 2.

The lithium ion battery includes a positive electrode sheet, a negative electrode sheet, a separator and an electrolyte. The positive electrode sheet, separator, and negative electrode sheet are wound to obtain a battery core, which is then packaged in a packaging shell and injected with electrolyte to obtain a pouch battery.

In the operation, the preparation of the negative electrode sheet: the negative electrode material obtained in the examples or comparative examples, conductive agent (SP), binder (PAA and SBR, with a mass ratio of 1.3:0.5) and thickener carboxymethyl cellulose (CMC) are mixed according to a mass ratio of 97.2:0.5:1.8:0.5 (100 mass parts in total), then 82 mass parts of deionized water are added and mixed uniformly to obtain negative electrode slurry; then the negative electrode slurry is uniformly coated on copper foil; after drying, rolling, cutting and other processes, the negative electrode sheet is obtained.

Preparation of the positive electrode sheet: the positive electrode active material NCM622 ($LiNi_{0.6}Co_{0.2}Mn_{0.2}O_2$), PVDF and SP are mixed according to a mass ratio of 97:1.8:1.2 (100 mass parts in total), then 82 mass parts of NMP are added to obtain positive electrode slurry; the obtained positive electrode slurry is coated on at least one surface of aluminum foil, dried, and rolled and compacted to obtain the positive electrode sheet.

Separator: polyethylene film, the thickness of the separator is $11\mu m$; the air permeability of the separator is 230s/100mL; the porosity of the separator is 40%.

The electrolyte adopts commercial electrolyte (manufacturer: Xinya Shanshan Advanced Materials (Quzhou) Co., Ltd., model E3).

Battery Performance Test Method

(1) Full battery first efficiency

Full battery charge capacity: the lithium ion battery is charged with 1C current to 4.35V, the charge capacity in this stage is recorded as c1, then charged at constant voltage until the cut-off current is 0.05C, the charge capacity in this stage is c2, and the full battery charge capacity is the sum of c1 and c2.

Full battery discharge capacity: after the fully charged battery cell rests for 30min, discharge with 1C current to 2.8V, the discharge capacity c3 in this stage is recorded, which is the full battery discharge capacity.

First efficiency = full battery discharge capacity c3/full battery charge capacity (c1+c2)×100%.

(2) Fast charge time

Charging is performed with 0.33C current directly to 8% SOC state, then according to the battery cell actual three-electrode window test, the charge windows for 10%, 20%, 30%, 40%, 50%, 60%, 70%, 80% are c1, c2, c3, c4, c5, c6, c7, c8 respectively, step charge is adopted to charge to 80%, that is, 8% to 10% is used for c1, 10% to 20% is used for c2, and so on, the charge time from 8% to 80% SOC state is recorded as the fast charge capability measurement standard, and the calculation formula is:

$$T(8\%\text{-}80\%)=(0.02/c1+0.1/c2+0.1/c3+0.1/c4+0.1/c5+0.1/c6+0.1/c7+0.1/c8)*60.$$

(3) Room temperature cycle number

**[0093]** Under 25°C conditions, cycle is performed with 0.21A/g (calculated based on the mass of positive electrode active material), 2.8-4.25V charge-discharge regime, the cycle number when cycled to 80% of initial capacity is recorded, as the material cycle performance effect.

(4) Storage days

Under 25°C, 0.33C current is used to perform a constant-capacity test and recorded as C0, then the battery cell is stored under 60°C high temperature conditions, afterwards the battery cell is taken out every 7 days to test capacity at room temperature and recorded as C1, C2, ......, Cn, until Cn is first less than or equal to 80% of C0, and the days are used as the measurement standard for storage capability and recorded as storage days.

Table 2: Performance of assembled batteries of Examples 1 to 9 and Comparative Examples 1 to 5

| Number | Discharge capacity (mAh/g) | Full battery first efficiency (%) | Fast charging time (min) | Room temperature cycle number/cycle | Storage days/days |
|---|---|---|---|---|---|
| Example 1 | 365.2 | 93.1 | 18.1 | 3689 | 357 |
| Example 2 | 366.1 | 92.8 | 17.6 | 3432 | 322 |
| Example 3 | 365.5 | 93.5 | 18.9 | 3521 | 378 |
| Example 4 | 368.2 | 91.3 | 17.0 | 3251 | 294 |
| Example 5 | 364.2 | 93.7 | 19.2 | 3617 | 385 |
| Example 6 | 363.8 | 94.2 | 19.5 | 3713 | 392 |
| Example 7 | 364.0 | 93.5 | 19.2 | 3656 | 385 |
| Example 8 | 366.4 | 93.7 | 17.0 | 3051 | 287 |
| Example 9 | 366.5 | 93.1 | 17.8 | 3332 | 329 |
| Comparative Example 1 | 362.1 | 92.1 | 25.5 | 2871 | 273 |
| Comparative Example 2 | 365.1 | 89.2 | 29.3 | 2665 | 245 |
| Comparative Example 3 | 362.8 | 90.2 | 15.8 | 1023 | 175 |
| Comparative Example 4 | 366.8 | 92.1 | 16.2 | 2073 | 259 |
| Comparative Example 5 | 366.7 | 90.8 | 16.3 | 2789 | 308 |

From Table 1 to Table 2, it may be seen that, by adjusting parameters such as hydroxylation processing, peroxidation processing, cold quenching processing and aluminum oxide coating amount during the preparation process, the compression index, Young's modulus and contact angle of the negative electrode material can be adjusted. The compression index of the negative electrode material obtained in Examples 1 to 9 is significantly reduced compared to the currently commercially available natural graphite (Comparative Example 3), indicating that the negative electrode material of the disclosure has suitable powder fluidity, the functional groups on the negative electrode material particle surface are reduced, thereby reducing side reactions during battery cycle, storage and other processes, improving the cycle and storage performance of the battery. The cycle performance of the assembled battery at room temperature and high temperature storage performance are significantly improved compared to Comparative Example 3. Although the fast charging performance is slightly decreased, the overall performance improvement of the battery is significant. The compression index of the negative electrode materials of Comparative Examples 1 to 2 and Comparative Example 4 are not within the range defined by the present application. The assembled batteries thereof have some increase compared to Comparative Example 3, but the first efficiency, fast charging time, cycle performance and storage performance are all inferior compared to Examples 1 to 9. The negative electrode material of Comparative Example 5 includes natural graphite, and the natural graphite surface is not coated with aluminum oxide, the functional groups on the natural graphite surface are completely exposed, the powder fluidity is poor, therefore, the compression index is high, and the exposure of surface functional groups leads to increased side reactions, thereby resulting in relatively poor high temperature storage performance.

The negative electrode material provided by the disclosure has suitable powder fluidity by adjusting the compression index, the functional groups on the negative electrode material surface are reduced, the interaction force between adjacent particles is small, it is easy to disperse during processing, reducing the possibility of particle agglomeration. Meanwhile, fewer functional groups on the surface reduce side reactions during high temperature storage process, thereby improving the high temperature storage performance of the negative electrode material. In addition, the negative electrode material has high Young's modulus, making the material have certain mechanical strength, reducing the generation of microcracks during cold pressing process, reducing the reaction activity specific surface thereof in high temperature storage, further improving the high temperature storage performance of the negative electrode material. Also, the contact angle between the negative electrode material and electrolyte is large, reducing the wettability of electrolyte to the negative electrode material, thereby reducing the reaction activity specific surface during high temperature storage process, further improving the high temperature storage performance of the negative electrode material. Therefore, the disclosure effectively overcomes some practical problems in the related art and thus has high utilization value and use significance.

Claims

1. A negative electrode material, comprising: natural graphite and a coating layer coated on a surface of the natural graphite, wherein a compression index K of the negative electrode material is: $30 \leq K \leq 80$, the compression index $K=100(V_0-V_F)N_0$, $V_0$ is an apparent volume per unit mass in a loose state, and $V_F$ is a tapped volume per unit mass.

2. The negative electrode material according to claim 1, wherein a Young's modulus E of the negative electrode material is: $17GPa \leq E \leq 25GPa$.

3. The negative electrode material according to claim 1 or 2, wherein a contact angle $\theta$ between electrolyte and a surface of the negative electrode material is: $82° \leq \theta \leq 90°$.

4. The negative electrode material according to claim 1, wherein a mass of the coating layer accounts for 0.5% to 1% of a mass of the natural graphite, a material of the coating layer comprises aluminum oxide or titanium oxide, and a particle size Dv50 of the aluminum oxide or the titanium oxide is less than $0.1\mu m$.

5. The negative electrode material according to claim 1, wherein a particle size Dv50 of the negative electrode material is $5\mu m$ to $20\mu m$.

6. A preparation method of the negative electrode material according to claim 1, comprising steps as follows:

   performing crushing and shaping processing on natural flake graphite raw material to obtain a first precursor;
   performing thermal shaping on the first precursor and removing surface functional groups to obtain a second precursor;
   performing cold quenching processing on the second precursor, then forming a coating layer on a surface of the precursor after cold quenching to obtain the negative electrode material.

7. The preparation method of the negative electrode material according to claim 6, wherein a step of performing thermal shaping on the first precursor and removing the surface functional groups comprises:

   heating up the first precursor to a first temperature;
   then, performing hydroxylation processing on the first precursor with deionized water, wherein an addition amount of the deionized water accounts for 1% to 3% of a mass of the first precursor;
   then, performing peroxidation processing on the first precursor with oxygen-containing gas, wherein the oxygen-containing gas is a mixed gas of nitrogen and oxygen, and a mass content of oxygen in the mixed gas is 10% to 40%;
   then, heating up to a second temperature and evacuating outward until a gas pressure is less than 0.2 atmospheric pressure, then performing temperature maintaining for 4h, wherein the first temperature is 450°C to 600°C, and the second temperature is 800°C to 1000°C.

8. The preparation method of the negative electrode material according to claim 6, wherein a step of forming the coating layer on the surface of the precursor after cold quenching comprises:

   adopting $\gamma$-type aluminum oxide to perform ball milling on the material after cold quenching processing for 1h to 3h, then calcining at 700°C to 900°C under inert atmosphere for 4h to 8h,
   then cooling down to room temperature to obtain the negative electrode material, wherein a particle size Dv50 of the $\gamma$-type aluminum oxide is less than $0.1\mu m$, and a usage amount of the $\gamma$-type aluminum oxide is less than or equal to 1% relative to a mass of the second precursor.

9. The preparation method of the negative electrode material according to claim 6, wherein the cold quenching processing is performing cooling process on the second precursor with inert gas, a temperature difference between a temperature of the cold quenching processing and a temperature of a previous process is 400°C to 600°C, and a flow rate of the inert gas is less than or equal to 60 L/min;
   and/or, a particle size Dv50 of the first precursor is $15\mu m$ to $25\mu m$, and a particle size distribution width (Dv90-Dv10)/Dv50<1.1.

10. A lithium ion battery, comprising a negative electrode sheet, wherein the negative electrode sheet comprises the negative electrode material according to any one of claims 1 to 5 or the negative electrode material prepared by the method according to any one of claims 6 to 9.

Perform crushing and shaping processing on natural flake graphite raw material to obtain a first precursor — S1

Perform thermal shaping on the first precursor and remove surface functional groups to obtain a second precursor — S2

Perform cold quenching processing on the second precursor, then form a coating layer on a surface of the precursor after cold quenching to obtain negative electrode material — S3

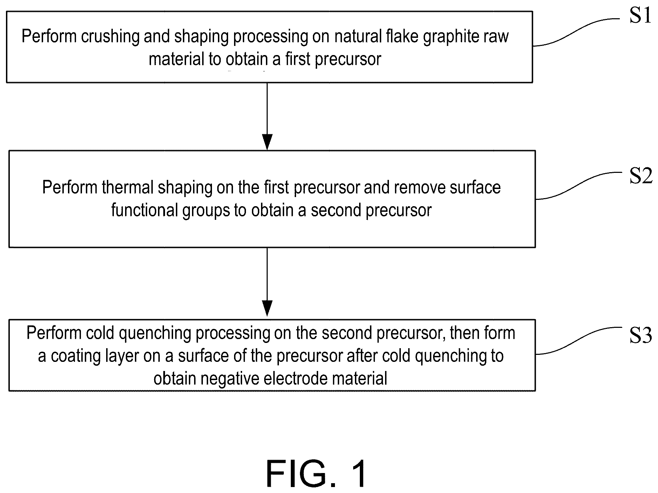

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 6609252023 T
- GB 341862017 T
- GB 360862018 T